# EUROPEAN PATENT APPLICATION

(11) **EP 3 473 082 A2**
(43) Date of publication of application: **24.04.2019**
(21) Application number: 18165690.1
(22) Date of filing: 04.04.2018
(51) Int. Cl.: A01G 9/24, A01G 31/02, A01G 9/26

(54) **METHOD OF GROWING PLANTS**

(30) Priority: 10.04.2017 US 201762483568 P; 10.04.2017 US 201762483569 P; 14.08.2017 US 201762544982 P
(71) Applicant: 1186269 B.C. Ltd, Kamloops, BC V2E 0A1 (CA)
(72) Inventor: GLASER, Grant, Edmonton AB, T6R0M5 (CA); L'ÉCUYER, Emmanuel, Nisku AB, T9E 7X4 (CA)
(74) Representative: Boco IP Oy Ab

(57) **Abstract**

A method of growing plants (32) in which the plants (32) extend in a growing chamber can include emitting light from a light source onto a foliage (36) of the plants (32), the light source being positioned within a light source conduit having an inlet and an outlet, and the emitted light being transmitted across a transparent wall of the light source conduit to the plants (32), circulating air in the light source conduit, the air circulating in the light source conduit absorbing heat from the light source, and transferring at least some of the heated air obtained from the outlet of the conduit to the growing chamber, thereby conditioning the temperature in the growing chamber. Other methods of handling the air medium are also presented.

## Description

### BACKGROUND

Many methods and techniques have been developed for growing plants over generations, but there always remains room for improvement, particularly from the standpoint of improving productivity or efficiency in an industrial production setting.

### SUMMARY

In accordance with one aspect, there is provided a growing chamber provided which can receive the roots or the foliage of the plants, or the entirety of the plants. The growing chamber can be sealed from its environment to allow controlling the air condition, such as the humidity level, in the growing chamber more effectively. There is also provided a method for conditioning the air in a growing chamber, and a system to implement the method.

The change of the air conditions can take place progressively, such as by progressively introducing previously conditioned air into, and extracting air out from, the air chamber, or by more directly conditioning the air within the growing chamber such as by adding moisture (humidifying), removing moisture (dehumidifying) or changing the temperature within the growing chamber itself.

Alternately, the air conditions in the growing chamber can be changed more abruptly. An abrupt change of air conditions in the growing chamber can be achieved by conditioning air in an air reserve in advance, and then extracting air from the growing chamber while replacing the extracted air with air from the air reserve. Depending on the volume of the air reserve, and if the air reserve is of at least the volume of the growing chamber, for instance, a significant change in the air conditions can take place relatively abruptly. In one embodiment, such an abrupt air change can take place after a period of air recirculation within the air chamber, for instance. In this context, the use of an enclosed air reserve is optional. For instance, if atmospheric air is already of suitable conditions, such as being of the dry condition after operating the growing chamber in a humid phase with humidity having been introduced directly into the growing chamber, for instance, an abrupt air change can take place by replacing the air in the growing chamber directly with atmospheric air, and the atmospheric air which is used in this context can be conditioned or not. For instance, it can be preferred to filter the atmospheric air, to heat it or to cool it as it is being drawn into the growing chamber from the outside. Heating or cooling the air in this manner can be performed by passing the air through a heat exchanger, for instance.

In accordance with another aspect, one or more lamps are positioned within a ventilated duct. The duct is configured to allow the light produced by the lamps to illuminate plants for growth. The plants are provided within a ventilation circuit which is partitioned from the ventilation of the lamp duct. More specifically, the foliage and the roots of the plants can be in independent ventilation circuits, in an embodiment.

Hot air from the lamp ventilation can be used to condition the air of a growing chamber, such as a root chamber or a foliage chamber for instance, or to condition the air of both a root chamber and a foliage chamber independently to different target conditions. The hot air from the lamp ventilation can be used to condition the air of a growing chamber directly, via a corresponding air circulation system, by introducing the hot air into the growing chamber. Alternately, the hot air from the lamp ventilation can be used to condition the air of a growing chamber indirectly, by first introducing it into an air reserve to condition the air in the air reserve, and then introducing the air from the air reserve into the growing chamber, for instance. The air reserve can be in the form of a room, large duct, or other volume of air for instance. Accordingly, the heated air in the air reserve can be used in the one or more ventilation circuits of the plants for heating, as need be.

Accordingly, heat from the lamps can be recycled and used within a ventilation circuit of the plants, of the foliage, of the roots, or in a plurality of distinct ventilation circuits.

In accordance with one aspect, a method of growing plants is provided where the plants are grown on two opposite vertical walls. Light for growing the plants is provided by one or more lamps located within a duct made of a transparent material and positioned between the two opposite vertical walls. The duct is ventilated to evacuate heat from the lamps.

Accordingly, a single lighting subsystem can be used to grow plants on the surface of two opposite walls, and the lamps can be positioned relatively close to the plants as heat is evacuated therefrom by the ducts.

In accordance with another aspect, portions, or the entirety, of the plants can be grown in a growing chamber. The growing chamber can have an air system which can maintain a significant wind oriented transversally to the plants (or portion thereof). The wind can be generated by recirculating the air medium, for instance. Providing a significant wind in this manner can contribute to amplify the effects of alternating between conditions of high and low humidity quickly, particularly in the case of exposing the foliage to a significant wind at low humidity.

The portions of the plants grown in the growing chamber can be the foliage of the plants for instance, or the roots of the plants. Indeed, the field of aeroponics presents various previously known methods of growing roots in an air medium, rather than in a porous substrate such as earth, and these methods typically involve spraying the roots with a solution of nutrients in water. Alternate methods of growing roots in an air medium are possible. For instance, it was found that water mixed with nutrients can be provided in fine droplets and carried by the wind during air recirculation. There can be two distinct growing chambers side by side, such as a root growing chamber adjacent a foliage growing chamber and separated therefrom by a partition wall which holds the plants, and the two adjacent growing chambers can have independent, dedicated air systems. The partition wall can be horizontal, vertical, or other orientations. Alternately, the growing chamber can house entire plants having roots growing in a porous substrate such as earth, and still expose the foliage of the plants to a transversal wind while allowing air change. In an embodiment, the growing chamber or growing chambers is (are) sealed except for the associated air system, in a manner to impede air exchange with the surroundings or between two adjacent chambers.

The air system can include an air reserve which has a subsystem allowing to condition the air (e.g. filter, heat, cool and/or control humidity) and provide a substantial volume of fresh, conditioned air ready for exposure to the plants at the time of air change. In the case of a heated air reserve, the air reserve can be replenished using air from the light ventilation system, for instance, or another heat source.

In accordance with one aspect, there is provided a method of growing plants comprising simultaneously exposing the foliage of plants held by two opposite walls to light emitted inside a duct positioned between the two opposite walls, and circulating air within the duct.

In accordance with one aspect, there is provided a system for growing plants comprising two opposite walls holding plants with the foliage of the plants facing the opposite wall; a lighting subsystem extending between the two opposite walls, the lighting system comprising a light source contained within a duct made of transparent material, and a ventilation system for circulating air within the duct.

In accordance with one aspect, there is provided a method for growing plants comprising exposing plants to light emitted by a light source positioned within a ventilated duct, wherein at least a portion of the plants is provided in a ventilation circuit distinct from the ventilated duct, circulating air within the light source and thereby transferring heat from the light source to the circulating air, transferring the heat received by the circulating air to an air reserve, and using the air of the air reserve in the ventilation circuit.

In accordance with another aspect, there is providing a plant growing system comprising at least one a growing chamber and associated air system, the at least one associated air system having : ducting forming a recirculation loop with the associated growing chamber, including an inlet duct leading into the growing chamber, and an outlet duct leading out from the growing chamber, the inlet duct being opposite the outlet duct; an air reserve comprising an air conditioning subsystem, the air reserve having a volume at least equal to a volume of the growing chamber; a shutter subsystem operable to selectively close the recirculation loop and open the recirculation loop, wherein in said open configuration, the outlet duct is connected to an evacuation segment, and the inlet duct is connected to the air reserve; and a fan subsystem operable to recirculate air around the recirculation loop, including generating a wind inside the growing chamber, when the recirculation loop is in the closed configuration, and to simultaneously evacuate air and draw air into the growing chamber from the air reserve when the recirculation loop is in the open configu ration.

The plant growing system can have two of said at least one growing chambers, each having a corresponding associated air system, the two growing chambers including a root chamber, and a foliage chamber, and the two air systems including a root air system associated to the root chamber and a foliage air system associated to the foliage chamber, wherein each of the root air system and the foliage air system are operable independently to provide a distinct recirculated flow of air across the corresponding growing chamber when the corresponding recirculation loop is in the closed configuration, and to selectively replace the recirculated flow of air with air from the corresponding air reserve when the corresponding recirculation loop is in the open configuration; wherein the root chamber is separated from the foliage chamber by a partition wall adapted to receive plants with roots of the plants extending in the root chamber and foliage of the plants extending in the foliage chamber.

The growing chamber can have a partition wall having a plurality of removable plant holding panels. The plant holding panels can extend vertically. A seal can be held in compression between a periphery of each plant holding panel and a structure of the growing chamber.

The plant holding panels can include a structural member having a plurality of plant receiving areas, and a flexible and sealing material extending across the plant receiving areas, the flexible and sealing material being adapted to have an aperture defined therein to receive corresponding small plants, impede the transmission of light, water and algae thereacross, and yield as the stem of the plants grows.

A controller can be configured and adapted to automate at least some of the functions of the shutter subsystem, air conditioning subsystem and fan subsystem. An emitter subsystem can be configured and adapted to provide droplets of water with nutrients into the growing chamber. The controller can be adapted to interrupt the recirculation when operating said emitter subsystem, and resume said recirculation after having de-activated the emitter subsystem.

The air reserve can include a first air chamber, a second air chamber maintained at a different temperature than the first air chamber, a thermometer in the growing chamber, a mixing system via which the first and the second air chambers are connected to the inlet duct, and a controller connected to the thermometer, and adapted to control the mixing system to adjust the relative flow rate of air leading to the inlet duct between the first air chamber and the second air chamber in a manner to favor a target temperature value in the growing chamber.

The growing chamber can be provided inside a building having an HVAC system, the growing chamber and the air system being sealed from the HVAC system. Moreover, a positive pressure system can maintain a pressure of the recirculation loop above a pressure of the HVAC system during recirculation operation of the recirculation loop.

The inlet duct can extend along the first edge of the growing chamber and has a plurality of inlet apertures interspaced from one another along the length of the first edge, and the outlet duct can extend along the second edge of the growing chamber and has a plurality of outlet apertures interspaced from one another along the length of the second edge, to drive a wind curtain between the inlet duct and the outlet duct.

The air reserve can have a volume at least equal to a volume of the recirculation loop, including the volume of the associated growing chamber, preferably at least twice the volume of the recirculation loop, including the volume of the associated growing chamber.

In accordance with another aspect, there is provided a method of growing plants, wherein at least a portion of the plants extend within a growing chamber, the method comprising : recirculating air across the growing chamber to expose the portion of the plants to a transversal wind; conditioning fresh air in an air reserve; subsequently to said recirculating, evacuating the previously recirculated air while simultaneously drawing said conditioned air into the growing chamber; and repeating said steps of recirculating, conditioning, evacuating and drawing. The conditioning the fresh air can include reducing the relative humidity of the fresh air and controlling a temperature of the fresh air. The transversal wind can be of at least 10 km/h.

The portion of the plants can be roots of the plants, and the growing chamber a root chamber. The method can further include interrupting said recirculating; emitting a mist of water and nutrients into the root chamber during said interruption; and interrupting the emitting and resuming said recirculating.

The method can include growing a foliage of the plants in a foliage chamber, the foliage chamber being adjacent to and partitioned from the root chamber, in which case the method can further include recirculating foliage air across the foliage chamber to expose the foliage to a foliage transversal wind; conditioning fresh foliage air in a fresh foliage air reserve; subsequently to said recirculating foliage air, evacuating the previously recirculated foliage air while simultaneously drawing conditioned fresh foliage air from the foliage air reserve into the foliage chamber; and repeating said steps of recirculating foliage air, conditioning fresh foliage air, and evacuating the previously recirculated foliage air. A greater speed of transversal wind can be maintained in the foliage chamber than in the root chamber during said respective steps of recirculating. The transversal wind in the root chamber can be of between 10 and 30 km/h. The transversal wind in the foliage chamber can be above 50 km/h.

The air reserve can include both a first air chamber and a second air chamber, in which case the evacuating can further include simultaneously drawing air from the second air chamber into the first air chamber. The air of the second air chamber can be conditioned to a different temperature than the first air chamber. Steps of monitoring the air temperature in the growing chamber, simultaneously drawing a first flow of air from the first air chamber and a second flow of air from the second air chamber during said evacuating, and controlling the relative flow rates of the first flow and of the second flow can be performed in a manner to favor reaching a predetermined temperature target in the growing chamber.

In this specification, the expression "air conditioning" is used in a broad sense in a manner to encompass not only cooling the air, but performing either one or more of cooling, heating, filtering and controlling the relative humidity within the air such as by humidifying or de-humidifying.

In this specification, the expression "foliage" will be used in a broad sense to designate the stem and leaf portion of the plants, and also more generally any other features of the plants other than the roots.

Many further features and combinations thereof concerning the present improvements will appear to those skilled in the art following a reading of the instant disclosure.

### DESCRIPTION OF THE FIGURES

In the figures,
Fig. 1 is a schematic front elevation view of adjacent growing chambers sharing a central lighting subsystem.
Fig. 2 is an enlarged view of a portion of a duct of the lighting subsystem.
Fig. 3 is a schematic side elevation view of a lighting system having a dedicated ventilation system.
Fig. 4A is a schematic side elevation view of an example of a growing chamber and associated air system, with the associated air system operating in a recirculation mode;
Fig. 4B is a schematic side elevation view of the growing chamber and associated air system of Fig. 1, with the associated air system operating in an air change mode;
Fig. 5 is a schematic front elevation view of two adjacent growing chambers each having a dedicated associated air system, each growing a corresponding portion of the plants;
Fig. 6 is an oblique, fragmented view showing an example of a partition wall for a system such as shown in Fig. 5; and
Fig. 7 is a schematic side elevation view of an alternate example of a growing chamber and associated air system, with the associated air system operating in a recirculation mode.

### DETAILED DESCRIPTION

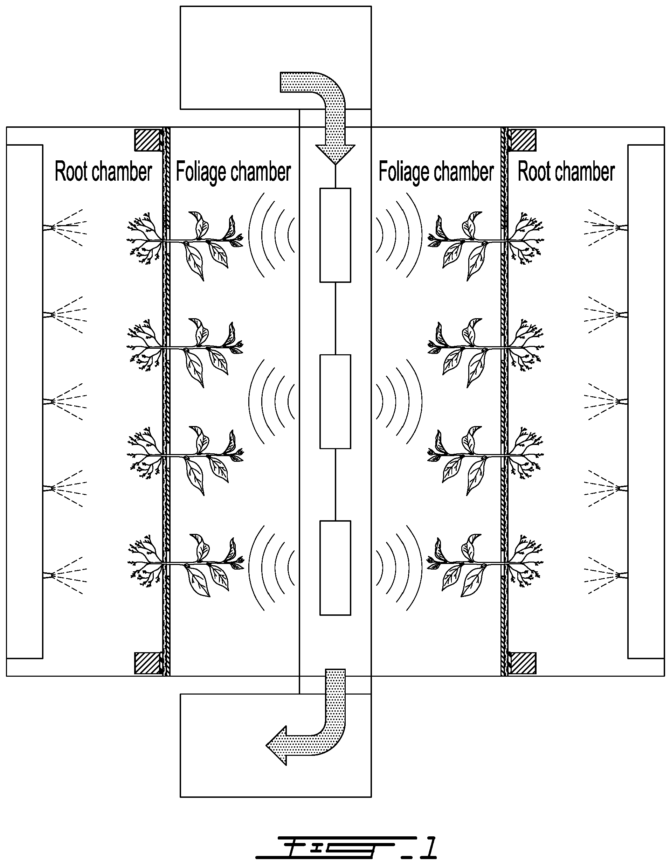

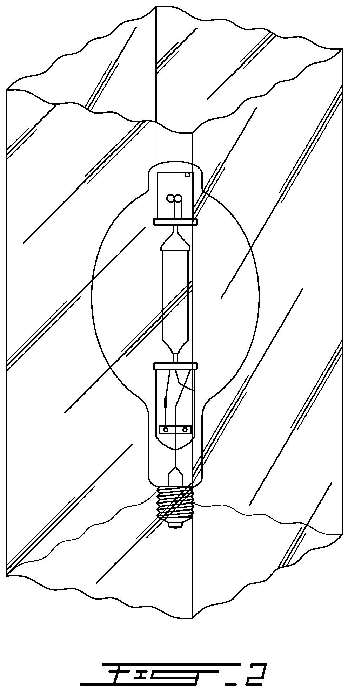

Fig. 1 shows an example system in which plants are held on two opposite vertical walls. A lighting subsystem is provided with a lighting duct extending vertically between the two opposite vertical walls. A portion of the lighting duct is shown enlarged on Fig. 2, where it can be seen that the lighting duct can have a rectangular cross-sectional shape with four transparent walls, for instance. It can be preferred to provide the walls with sliding or pivoting doors to allow access to lamps provided inside the lighting duct, for replacement or other maintenance, for instance. A ventilation system is provided to provide air flow within the lighting duct. The air flow can cool the lamps during operation, which can be beneficial to bulb life in some embodiments, and further contribute to maintaining a desired temperature in the growing chamber. In this embodiment, the vertical walls can be flat rectangular walls.

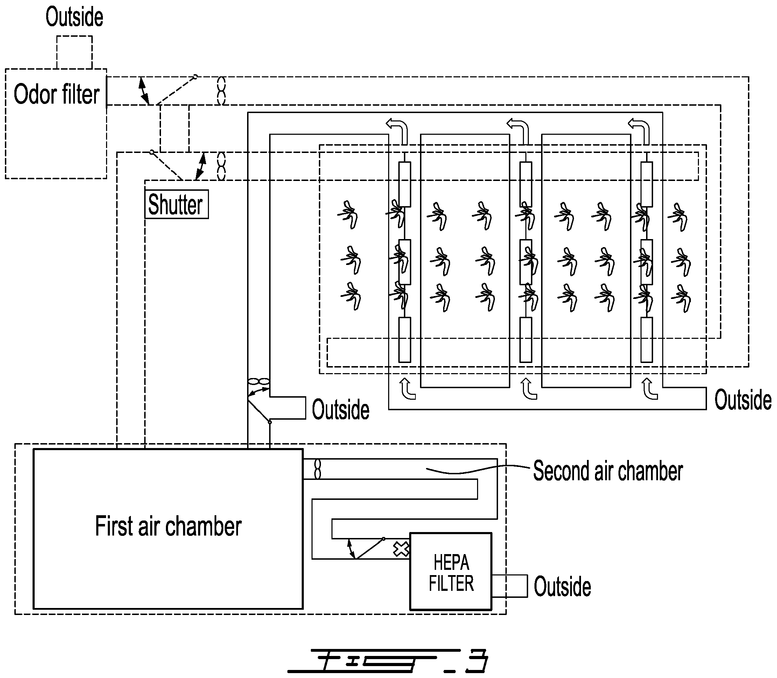

In this example, a plurality of light sources (more specifically light bulbs) can be housed within a single lighting duct, interspaced along the length of the lighting duct. Moreover, more than one horizontally interspaced lighting ducts can be provided to span the entire length of the flat rectangular walls. For instance, as shown in the side elevation view of Fig. 3, three horizontally interspaced lighting ducts are provided to span the entire length of the flat rectangular walls. In scenarios having more than one light source per duct, and/or more than one duct a plurality of light sources can be ventilated by a single system having a network of ducts. For instance, as shown in Fig. 3, an inlet duct is provided to connect the inlet ends of a plurality of lighting ducts, and an outlet duct is provided to connect the outlet ends of the plurality of lighting ducts, acting as a manifold. The inlet duct can draw air from outside, for instance, and the outlet duct can return air to the outside, for instance. Alternately, as will be exemplified below the outlet duct can direct air heated by the light sources to an air chamber or other element of the growing plant. In the example shown in Fig. 3, the outlet duct is provided with a baffle which can be adjusted to output a controllable portion of the air outside, and the rest of the air into a first air chamber.

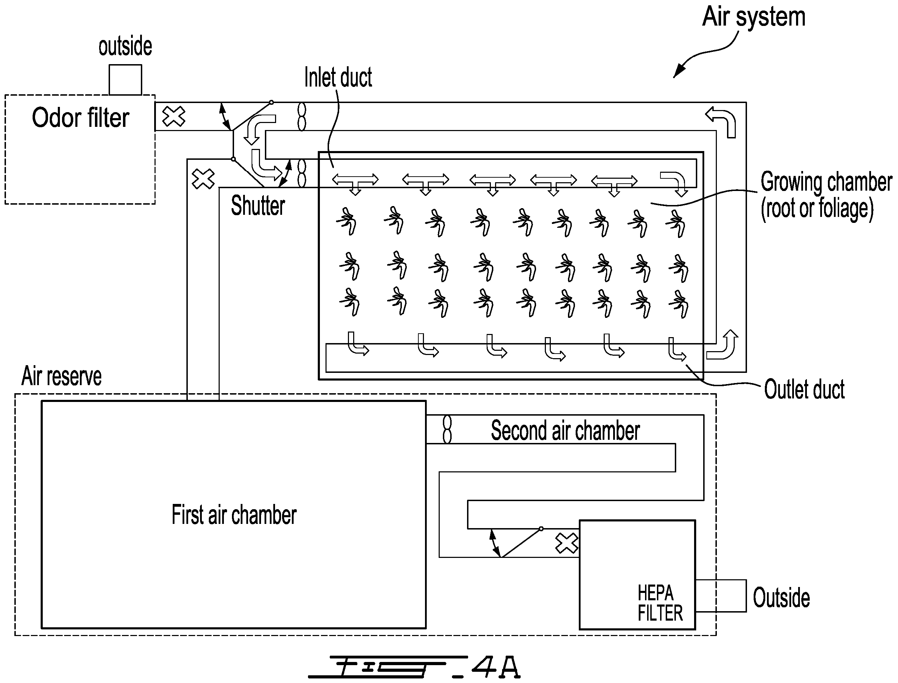

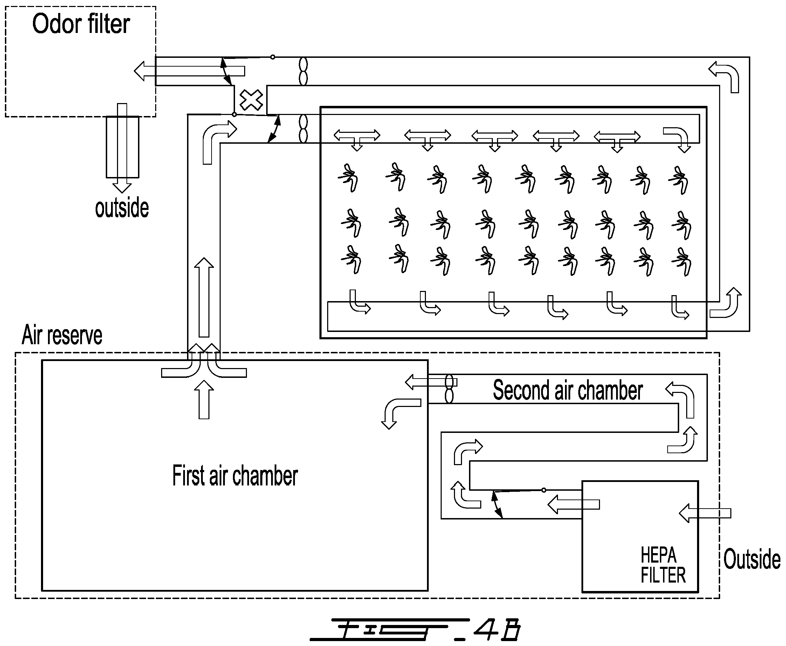

Returning to Fig. 1, this configuration can be referred to as a 'mirror' system, as similar plant arrangements are provided on both opposite side walls. Alternately, the vertical walls can be portions of a cylindrical wall. The lighting duct can also be cylindrical instead of rectangular prism shaped if desired. It will be noted that in Fig. 1, the foliage and the roots of the plants are grown in distinct growing chambers which are partitioned from one another by the walls. As will be seen from the description below, and as shown in Fig. 4 for instance, it was found advantageous to provide such distinct growing chambers with distinct ventilation circuits which can create specifically adapted microclimates for the roots and for the foliage. In scenarios having ventilation circuits for the foliage and/or the roots, it can be desired to maintain the given microclimate within specific temperature parameters. As will be presented below, the heated air obtained from the lighting subsystem can be used as a heat source to allow one or more of such microclimates to be maintained within the specific temperature parameters in a manner which may be more energy efficient than using another heat source.

Fig. 4A shows a first example of a plant growing system. The plant growing system has a growing chamber in which a portion of the plants (e.g. roots or foliage) grows. In this plant growing system, the growing chamber acts essentially as a duct, within which a movement of air transversal to the plants, referred to hereinafter as a "wind", can be maintained. To this end, an air system is provided in association with the growing chamber. In this embodiment, it was preferred to maintain the air conditions relatively stable while exposing the corresponding portion of the plants to the wind. To this end, it was preferred to provide the air system with additional ducting to form a recirculation loop with the growing chamber and to provide a growing chamber which was sealed from its surroundings except from an inlet duct and outlet duct which connect the corresponding growing chamber to the corresponding air system. In this embodiment, the air system is also provided with a fan subsystem, including here two fans, which is adapted to maintain a satisfactory speed of wind against the portion of the plants. It was found that maintaining a certain speed of wind against the portion of the plants during growth could be beneficial. The satisfactory speed of wind can vary depending on the nature of the portion of the plants being grown, from one plant species to another, and even depending on the growth stage of the plants, to name a few example

The growing chamber and the recirculation loop are sealed from their surroundings in a manner to impede gaseous exchange between the recirculation loop and the surroundings. As the growing chamber and air system can be partially or fully enclosed in one or more buildings, the surroundings can be the air of the building (e.g. HVAC environment), which can also serve as an air reserve in some embodiments as will be explained below. In one embodiment, the recirculation loop can be provided with a positive pressure system which ensures that a positive pressure is maintained between the recirculation loop and the surroundings, to control the direction of any "leaks". This can allow to effectively maintain a "microclimate" or "artificial environment" in the growing chamber and it will be seen hereinbelow that that different features of this artificial environment such as temperature, gaseous composition (e.g. relative humidity, nutrient content in humidity), wind speed, can be controlled to a relatively high degree.

It was found beneficial in some embodiments to perform relatively frequent air changes. Here also, the satisfactory frequency can depend on a number of factors and will be determined as a function of the type of plant being grown. To this end, the system shown in the figures is configured to allow both abrupt air changes and recirculation, but it will be understood that both features are independent and that alternate embodiments can omit one or the other of these two features, for instance. It was found that one efficient way to perform relatively thorough air changes was to provide the air system with an air reserve, and a shutter subsystem, having here two shutters, which can be activated to selectively open or close the recirculation loop. More specifically, the recirculation driven by the fan subsystem can occur when the recirculation loop is in the closed configuration.

The open configuration of the recirculation loop is shown in Fig. 4B. When the recirculation loop is in the open configuration, the outlet duct is connected to an outlet segment which can be used to evacuate the air from the recirculation loop. In this embodiment, the evacuated air is evacuated to the outside of any building(s) housing the growing chamber or air system. Depending on the type of plant being grown and on some other factors, it can be useful to provide the outlet segment with an odor filter which will remove or attenuate odors which have been accumulated from the plant portions in the previously recirculated air. In this embodiment, the same fan susbystem used to perform the recirculation in the closed configuration can be used to drive the air change in the open configu ration.

Moreover, when the recirculation loop is in the open configuration, the inlet duct is connected to an air reserve. In this embodiment, the air provided in the air reserve has been previously "conditioned", to prepare it to be appropriate for exposure to the plants. The conditioning typically involves controlling its temperature (e.g. by heating or cooling). The conditioning can also involve filtering the air. In this embodiment, this can be achieved by a HEPA filter provided in the path of the air as it is drawn from an air source outside any building, for example. The necessity to heat or cool the air can vary depending on the environment of the growing system, for instance. It can be preferred for the air reserve to include more than one air chamber. In this example, the air reserve includes two air chambers in 'series', a first one of the air chambers being directly connectable to the recirculation loop and a second one of the air chambers being connectable to the recirculation loop via the first air chamber. In such an arrangement, the first air chamber can have at least the volume of the growing chamber, for instance, and the second air chamber can be used to pre-condition (e.g. stabilize or partially condition), or fully condition the air, prior to its introduction into the first air chamber. In an alternate embodiment, the air can be fully conditioned in the first air chamber, instead of being pre-conditioned beforehand, for instance. The overall air reserve can have a volume at least as important as the volume of the growing chamber, preferably at least the volume of the recirculation loop including the growing chamber, and more preferably at least twice the volume or even more to provide a "buffer", "stabilization" and/or pre-conditioning zone.

It will also be noted that any air chamber forming part of the air reserve does not necessarily need to be provided in the form of a distinct room. For instance, if the growing chamber is provided in a building and the growing chamber is sealed from the building apart from an inlet duct and outlet duct, the volume which surrounds the growing chamber in the building can be used as an air reserve.

It will also be noted that in some alternate embodiments, it can be preferred to provide progressive changes to the air condition, rather than quick air changes. To this end, there may be no need for an air reserve and it can be preferred instead to condition the air in a duct leading to the growing chamber, or rather directly in the growing chamber.

In the configuration shown in Fig. 4A, an additional fan is provided between the first air chamber and the second air chamber. This additional fan can be used as a "pressure booster" to increase the pressure in the first air chamber relative to the second air chamber. The pressure of the first air chamber can thus be maintained at a positive pressure, and the shutter between the first air chamber can be partially left open in order to provide for a fully or partially conditioned air source which can be used to maintain the pressure in the recirculation loop at the desired pressure and account for any possible leaks of the recirculation loop.

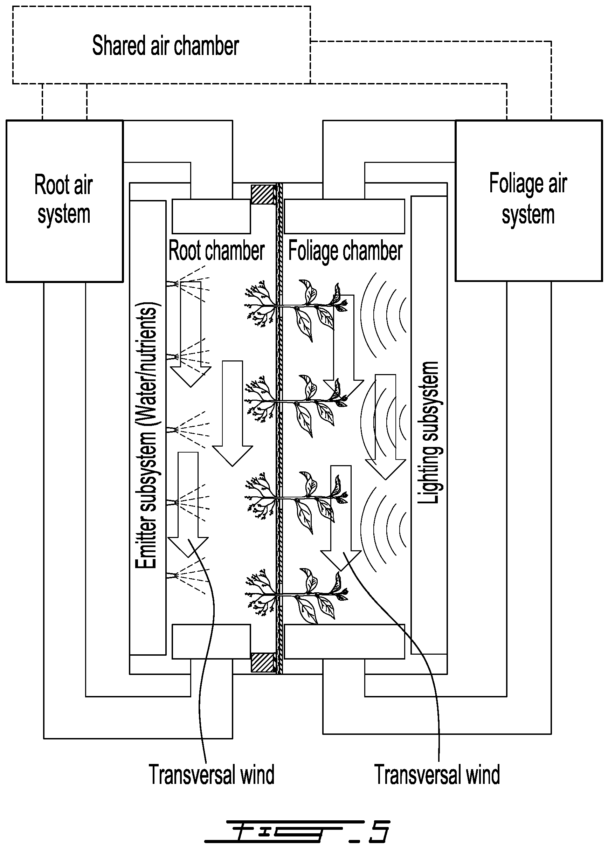

Turning now to Fig. 5 it will be understood that the concept of using a growing chamber having an associated air system can be expanded in a manner to provide two adjacent growing chambers with independent, dedicated air systems. In the embodiment shown in Fig. 4, a first growing chamber is a root chamber and is provided in association with a root air system, whereas an adjacent growing chamber is a foliage chamber. More specifically, the plants are held by a partition wall, with the root portion growing on one side of the partition wall and the foliage portion growing on the other side of the partition wall. In this embodiment, the partition wall provides not only a way to hold the plants, but also a relatively air-tight seal between the foliage chamber and the root chamber in a manner to maintain the two micro-climates or artificial environments virtually distinct from one another.

The two air systems are operable independently to one another and their operation can be specifically controlled in a manner to optimize the respective environments to the respective plant portions. For instance, some species of plants grow better with a lower standing wind speed in the root portion than in the foliage portion. The selected relative humidity and temperature can also be different between the root chamber and the foliage chamber, and so can the rate of air changes. Accordingly, the air systems used for the root chamber and for the foliage chamber can differ from one another. In some embodiments, the air system associated to the foliage chamber may require a recirculation loop while the air system associated to the root chamber does not, or vice versa. Similarly in some embodiments, the air system associated to the foliage chamber may require an air reserve to condition the air in advance of an abrupt air change, whereas the air system associated to the root chamber does not, or vice versa.

It will be understood that although a relatively high degree of independence can be preferred between the two air systems, some components of the air systems can be shared. For instance, if a pre-conditioning chamber is used, it can be useful in some embodiments to use the one or more common pre-conditioning chamber both for the root air system and for the foliage air system.

In scenarios where a partition wall is used between the root chamber and the foliage chamber, and where it is desired to maintain different air conditions in the two adjacent chambers, the partition wall can have the function of keeping the chambers as air tight as possible from one another. In this manner, the partition wall itself can be designed in a manner so as to optimize air tightness, and a periphery of the partition wall can be sealed against a corresponding structure of one of the growing chambers in a manner to prevent or impede the leakage of gas along the periphery. Indeed, the roots and the foliage not necessarily require the same micro-climate to favor their respective growing potential. Moreover, the roots require things such as nutrients to grow whereas exposure of the foliage to the same things can even be detrimental to certain types of plants. The partition wall can further have the function of preventing or at least strongly impeding transmission of light thereacross. Indeed, the foliage required light to grow whereas the exposure of the roots to light can be detrimental, at least for certain types of plants.

In the embodiment shown in Fig. 5, an emitter subsystem is provided in the root chamber to provide water droplets charged with nutrients for the roots, and a lighting subsystem is provided in the foliage chamber to provide light to the foliage at wavelengths which favour the growth of the plant.

In a scenario where a "mirror" system, such as shown in Fig. 1, is provided with ventilated growing chambers such as described in Fig. 5, the foliage on both sides of the lighting subsystem can share a common growing chamber, and a common ventilation system, or be partitioned and use dedicated ventilation systems, for instance.

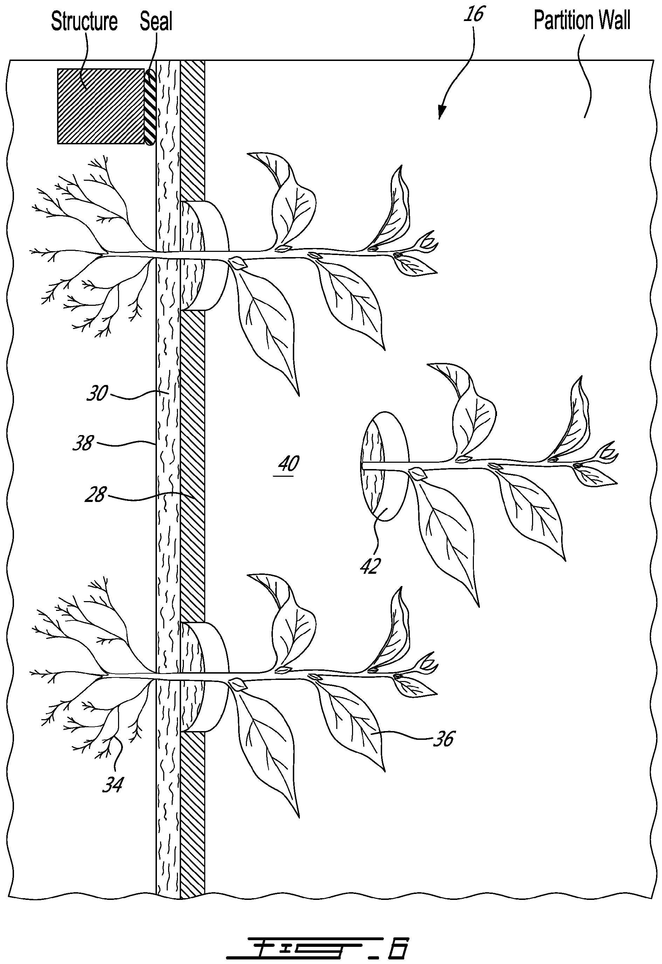

Fig. 6 shows a portion of an example of a partition wall panel 16. A plurality of partition wall panels can be positioned side by side to cover a greater span if desired. In this example, the partition wall panel 16 includes a structural member 28 and a fiberboard member 30 which are secured to one another face against face (i.e. sandwiched). Plants 32 can be seen to be held by the panel 16 at areas which can be referred to as plant holding areas. In this specific embodiment, the panels 16 are manufactured without the plants. At the culture area, young plants are engaged into a slit which is cut directly into the fiberboard member 30, in a manner for the roots 34 to grow outwardly from a first face 38 of the panel 16 and the foliage 36 (e.g. leaves, stem, branches, etc) to grow outwardly from the second, opposite face 40 of the panel 16. In an alternate embodiment, the plants can be held in a holding member (not shown) which, itself, is snugly engaged in a corresponding aperture of the panel, for instance. Many other configurations are possible.

In this embodiment, the fiberboard member 30 can be made of a fiberboard of coconut fiber, but other fibrous, porous, materials can be used, including synthetic materials for instance. In this embodiment, the structural member 28 is made of a rigid, sturdy material adapted to provide structure to the panel to support the plants as they grow. The structural member 28 can be made of sealed plywood, magnesium board, coated metal, or a high density plastic, for instance, or a more complex structure using a frame and web construction. In this embodiment, the structural member 28 is provided with apertures 42 allowing to access the fiberboard 30 which is provided behind it. The apertures 42 can be sized as a function of the expected size of the stem of the mature plant, preferably in a manner to ensure that the apertures 42 will be at least slightly larger than the stem of the mature plant. The structural member 28 can be selected in a manner to be opaque and to prevent or severely limit the transmission of light across the panels. It can be provided with a white or mirror surface on the side of the foliage area, to favour reflection of incoming light over absorption in the form of heat. In some embodiments, it can be preferred to use, for the structural member 28, a material which can be easily drilled, sawn and/or screwed into. For instance, it can be preferred to use brackets which are screwed into the structural board to hold the branches and "train" them by attaching them to the board. This can be convenient both to favour density during culture, and facilitate pruning and attending to plants, for instance. The slits in the fiberboard member 30 can be small, and the fiberboard can expand as the plant grows, in a manner for there to be very limited space for the atmosphere in the root zone to transfer across the panels to the foliage zone, which contributes to sealing the root chamber from the foliage chamber.

The panels can be secured to a structure of the growing chamber such as a frame, with seal squeezed therebetween as simply as by using wing nuts, fasteners or clamps, for instance, or by any other suitable way. In the embodiment shown in the figure, the structure can be provided in the form of a rectangular frame, for instance, with a suitable seal such as rubber or other elastomeric material running continuously around the periphery of the frame structure, on an outward face thereof. The seal can abut a porous material such as shown in the figure, but in an alternate embodiment, it can be preferred that the seal directly engage a corresponding portion of the rear face of a more rigid and sealed panel. This can be achieved by leaving the corresponding peripheral portion of the rear face of the structural member 28 bare, for instance.

It will be understood that the partition wall structure shown in Fig. 6 can be adapted for growing plants vertically, but that in alternate embodiments, it can be preferred to orient the partition wall structure horizontally instead of vertically, or obliquely.

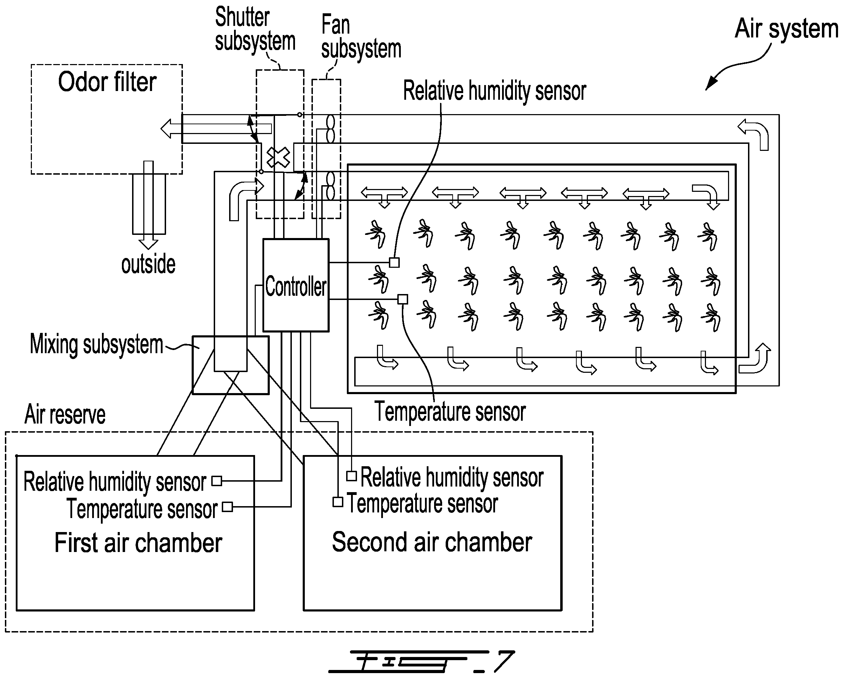

Another embodiment of a plant growing system is presented in Fig. 7. In this embodiment, the air reserve includes a first air chamber and a second air chamber which are both connectable to the growing chamber via a mixing subsystem. The mixing subsystem can be used to selectively vary the flow rate of air being drawn from the first air chamber relative to the flow rate of air being drawn from the second air chamber preferably in real time, while an air change is being performed. For instance, the first air chamber can be at a first temperature (e.g. a "cool" temperature"), and the second air chamber can be at a second temperature (e.g. a "hot" temperature). The mixing subsystem can be controlled by a controller which receives an input from a temperature sensor in the growing chamber. The controller can be provided with temperature values of the temperature in the first and second air chambers, respectively, and with a function to aim for a predetermined temperature target in the growing chamber, in a manner to automatically select a desired flow rate ratio destined to reach this target temperature, based on the temperature of the first and second air chambers, for instance.

In a scenario such as described above, the second air chamber can be maintained at the second temperature by heating, for instance. The heating can be applied by a traditional heater. However, it may be more energy efficient to use the heat obtained from cooling the lamps as a source of heat for the second air chamber. The heat from the lighting system can be transferred into the second air chamber by mass transfer (e.g. transferring the air from the lighting subsystem into the second air chamber), or via a heat exchanger which can optionally be assisted by heat pump, for instance. Traditional heating can be applied to supplement any insufficiency in the amount of heat provided by the lighting subsystem. Alternately, the heat from the lighting subsystem can be transferred directly to a corresponding one of the ventilation circuits, rather than via the intermediary of the second air chamber.

The same controller, or one or more separate controllers, can be used to control or partially automate at least some of the functions of the shutter subsystem, the fan subsystem, the emitter subsystem, the lighting subsystem and/or any other subsystem being used in a given embodiment. Such one or more controllers can also be used with the embodiment shown in Fig. 1. For instance, it can be preferred in an embodiment to interrupt the recirculation when operating the emitter subsystem, and to resume the recirculation after having de-activated the emitter subsystem, which can be conveniently done by using the same controller for the two subsystems. In the embodiment shown in Fig. 4, a single controller is used. Moreover, the mixing subsystem, growing chamber(s) and the air chambers are each equipped with a dedicated relative humidity sensor and temperature sensor which are connected to the single controller.

In some embodiments, it can be desired to house the growing chamber(s) and the air system(s) in one or more buildings. For instance, the air reserve can be in a separate building than the growing chamber, or in the same building, depending on the embodiment. The building(s) can have their own, independent air systems, such as an HVAC system for instance. Accordingly, the growing chamber(s), and a portion or the entirety of the growing chamber(s) associated air system(s) can be designed in a manner to be sealed from the air system of the buildings (their surrounding). Alternately, in order to allow for possible leaks, the associated air system(s) can be provided with a positive pressure system (e.g. a system which maintains a positive pressure of gas from the associated air system to the building air system).

It can be preferred to generate a relatively uniform wind in the growing chamber(s). To this end, in the embodiment shown in Fig. 1A, for instance, the inlet duct extends along a first edge of the growing chamber and has a plurality of inlet apertures interspaced from one another along the length of the first edge, and the outlet duct extends along the second edge of the growing chamber and has a plurality of outlet apertures interspaced from one another along the length of the second edge. The growing chamber, inlet duct and outlet duct can be referred to collectively as being a growing assembly in the context of this specification.

As presented above, it can be preferred to use a different wind speed in the root chamber than in the foliage chamber when recirculating the air. For instance, the wind speed transversal to the roots can be between 10 and 30km/h, and the wind speed transversal to the foliage can be above 50 km/h, even above 100km/h depending on the applications. Other wind speed can be better suited for some types of plants. It can be desired to provide the partition wall, if used, with some means of clamping the branches of the plant if running with such high speeds. This can be done as simply as screwing branch-holding brackets into the structural board in some embodiments.

Similarly, different temperatures can be maintained in the foliage chamber and in the root chamber. In one embodiment, it was desired to maintain an air temperature of between 45 and 80°F in the foliage chamber and of between 50 and 70° F in the root chamber. In some embodiments, the conditions such as temperature, relative humidity, etc. can be monitored in the recirculating loops and also optionally adjusted in real time. The frequency of air changes can vary from one embodiment to another. It can be desired to perform full air changes each hour, for instance, or more or less frequently depending on the embodiment.

The raising of the humidity level from a low relative humidity level to a high humidity level, or from a lower temperature to a higher temperature, can be performed progressively or abruptly, and can include performing a "full" air change, e.g. extracting and drawing in air volumes at least equal to the volume of the corresponding growing chamber, or performing a partial air change, e.g. extracting and drawing in air volumes lower to the volume of the corresponding growing chamber. Partial air changes can be performed on the basis of sensor readings inside the growing chamber, for instance. The air drawn into the growing chamber can be drawn in from an air reserve which can have been previously conditioned to the corresponding humidity level (and optionally, to other required parameters such as temperature). Alternately, if the atmospheric humidity level is suitable, the air drawn into the growing chamber can be drawn in from the atmosphere, and can be conditioned or not during its passage between the atmosphere and the growing chamber. Accordingly, the air reserve is optional in some embodiments.

In some phases, it can be desired to operate the growing chamber in relatively stable conditions. Such stable conditions can include sustaining an environment which is required by the plant (of the portion of the plant associated to the corresponding growing chamber) for the plant to grow or evolve as intended. Operating the growing chamber can include steps such as providing suitable ventilation (e.g. recirculating the air), suitable lighting, and conditioning the air in the growing chamber such as by providing heat, fresh air, humidity, etc.

As can be understood, the examples described above and illustrated are intended to be exemplary only. The scope is indicated by the appended claims.

## Claims

**1.** A method of growing plants wherein at least a portion of the plants extend within a growing chamber, including emitting light from a light source onto a foliage of the plants, the light source being positioned within a light source conduit having an inlet and an outlet, and the emitted light being transmitted across a transparent wall of the light source conduit to the plants, circulating air in the light source conduit, the air circulating in the light source conduit absorbing heat from the light source, and transferring at least some of the heated air obtained from the outlet of the conduit to the growing chamber, thereby conditioning the temperature in the growing chamber.

**2.** The method of claim 1 wherein the transferring at least some of the heated air includes transferring at least some of the heated air to an air reserve, and transferring air from the air reserve to the growing chamber.

**3.** The method of claim 2 wherein transferring at least some of the heated air to the air reserve includes sensing the temperature of the air in the air reserve, and controlling a quantity of said heated air being transferred to the air reserve based on the sensed temperature, and in a manner to reach a target temperature.

**4.** The method of claim 1 wherein transferring at least some of the heated air to the growing chamber includes sensing the temperature of the air in the growing chamber, and controlling a quantity of said heated air being transferred to the air reserve based on the sensed temperature, and in a manner to reach a target temperature.

**5.** The method of claim 1 wherein the portion of the plants extending within the growing chamber is a root portion of the plants.

**6.** The method of claim 1 further comprising circulating air across the growing chamber to expose the portion of the plants to a transversal wind.

**7.** The method of claim 6 wherein the transversal wind is of at least 10 Km/h.

**8.** The method of claim 6 wherein the foliage of the plants extends within the growing chamber.

9. The method of claim 1 wherein the foliage of the plants extends on two opposite sides of the light source conduit, said emitted light being transmitted to both opposite sides across corresponding transparent walls.

**10.** The method of claim 9 wherein said plants are held on two opposite walls, and a plurality of light source conduits are interspaced from one another along the length of the two opposite walls, the heated air obtained from the outlets of each one of the light source conduits being combined prior to transfer to the growing chamber.

**11.** A method of growing plants, wherein at least a portion of the plants extend within a growing chamber, said method comprising :
conditioning air in an air reserve;
evacuating air from the growing chamber while simultaneously drawing said conditioned air into the growing chamber;
repeating said steps of conditioning and evacuating and drawing.

**12.** The method of claim 11 the method further comprising circulating air across the growing chamber to expose the portion of the plants to a transversal wind.

**13.** The method of claim 12 wherein said circulating includes recirculating air across the growing chamber, further comprising repeating said recirculating.

**14.** The method of claim 13 wherein said recirculating is performed between successive steps of evacuating.

**15.** The method of claim 12 wherein said transversal wind is of at least 10 km/h

**16.** The method of claim 12 wherein said portion of the plants is roots of the plants, the growing chamber is a root chamber, further comprising :
interrupting said circulating;
emitting a mist of water and nutrients into the root chamber during said interruption; and
interrupting the emitting and resuming said recirculating.

**17.** The method of claim 11 wherein said conditioning the air includes reducing the relative humidity of the air and controlling a temperature of the air.

**18.** The method of claim 11 wherein said portion of the plants is roots of the plants, the growing chamber is a root chamber, further comprising growing a foliage of the plants in a foliage chamber, the foliage chamber being adjacent to and partitioned from the root chamber

**19.** The method of claim 18 further comprising :
circulating foliage air across the foliage chamber to expose the foliage to a foliage transversal wind.

**19.** The method of claim 19 further comprising maintaining a greater speed of transversal wind in the foliage chamber than in the root chamber during said respective steps of circulating.

**20.** The method of claim 11 further comprising emitting light from a light source onto a foliage of the plants, the light source being positioned within a light source conduit having an inlet and an outlet, and the emitted light being transmitted across a transparent wall of the light source conduit to the plants, circulating air in the light source conduit, the air circulating in the light source conduit absorbing heat from the light source, and transferring at least some of the heated air obtained from the outlet of the conduit to the growing chamber, thereby conditioning the temperature in the growing chamber.

**21.** The method of claim 11 wherein the air reserve includes a first air chamber and a second air chamber

22. The method of claim 21 wherein said evacuating further includes simultaneously drawing air from the second air chamber into the first air chamber.

**23.** The method of claim 11 further comprising drawing HEPA-filtered air into the air reserve simultaneously to said evacuating.

**24.** A method of growing plants, wherein at least a portion of the plants extend within a growing chamber, said method comprising :
circulating air across the growing chamber to expose the portion of the plants to a transversal wind.

**25.** The method of claim 24 wherein said circulating includes recirculating air across the growing chamber.

**26.** The method of claim 25 further comprising :
conditioning fresh air in an air reserve;
evacuating air from the growing chamber while simultaneously drawing said conditioned air into the growing chamber; and
repeating said steps of recirculating, conditioning, evacuating and drawing.

**27.** The method of claim 24 wherein said transversal wind is of at least 10 km/h.

**28.** The method of claim 24 wherein said portion of the plants is roots of the plants, the growing chamber is a root chamber, further comprising :
interrupting said circulating;
emitting a mist of water and nutrients into the root chamber during said interruption; and
interrupting the emitting and resuming said recirculating.

29. The method of claim 24 wherein said portion of the plants is roots of the plants, the growing chamber is a root chamber, further comprising growing a foliage of the plants in a foliage chamber, the foliage chamber being adjacent to and partitioned from the root chamber, further comprising :
circulating foliage air across the foliage chamber to expose the foliage to a foliage transversal wind.

**30.** The method of claim 29 further comprising impeding said foliage air from mixing with the air recirculating across the root chamber during said recirculation.

**31.** The method of claim 29 further comprising maintaining a greater speed of transversal wind in the foliage chamber than in the root chamber during said respective steps of circulating.

**32.** The method of claim 24 wherein said portion of the plants is roots of the plants, the growing chamber is a root chamber, wherein said transversal wind is of between 10 and 30 km/h.

**33.** The method of claim 24 wherein said portion of the plants is a foliage of the plants, the growing chamber is a foliage chamber, wherein said recirculating comprises exposing the foliage of the plants to a transversal wind of above 50 km/h.

**34.** The method of claim 24 further comprising emitting light from a light source onto a foliage of the plants, the light source being positioned within a light source conduit having an inlet and an outlet, and the emitted light being transmitted across a transparent wall of the light source conduit to the plants, circulating air in the light source conduit, the air circulating in the light source conduit absorbing heat from the light source, and transferring at least some of the heated air obtained from the outlet of the conduit to the growing chamber, thereby conditioning the temperature in the growing chamber.

35. The method of claim 25 further comprising maintaining a positive pressure between a recirculation loop including the growing chamber and its surroundings during said recirculating.
